# EUROPÄISCHE PATENTANMELDUNG

(11) **EP 2 385 224 A2**
(43) Veröffentlichungstag der Anmeldung: **09.11.2011**
(21) Anmeldenummer: 11161390.7
(22) Anmeldetag: 06.04.2011
(51) Int. Cl.: F01K 13/00, F01K 23/10, F02B 41/10, F02B 63/04, F02G 5/02, F01K 23/06

(54) **Motorbetriebene Einrichtung zur Stromerzeugung sowie Verfahren hierfür**

(30) Priorität: 05.05.2010 DE 102010019580
(71) Anmelder: ORC energy GmbH, 44269 Dortmund (DE)
(72) Erfinder: Schröter-Hills, Christine, 63303, Dreieich (DE)
(74) Vertreter: KEIL & SCHAAFHAUSEN Patentanwälte

(57) **Zusammenfassung**

Die Erfindung betrifft eine motorbetriebene Einrichtung zur Stromerzeugung mittels eines Verbrennungsmotors (1). Dieser treibt einen Generator (2) zur Stromerzeugung an. Der Abgasstrom des Verbrennungsmotors (1) wird zumindest teilweise einem Turbogenerator (5,6) zugeführt, in welchem ebenfalls Strom erzeugt wird. Die in dem Abgasstrom des Verbrennungsmotors (1) und/oder des Turbogenerators (5,6) enthaltene thermische Energie wird zur zusätzlichen Stromerzeugung und/oder als Prozesswärme genutzt.

## Beschreibung

Die Erfindung betrifft eine Einrichtung sowie ein Verfahren zur Stromerzeugung mit einem Verbrennungsmotor, der mit einem Generator zur Stromerzeugung verbunden ist, und dessen Abgasleitung mit einem Turbogenerator verbunden ist, um in dem Turbogenerator zusätzlich Strom zu erzeugen.

Aus der DE 10 2007 048 136 A1 ist es bekannt, einem Verbrennungsmotor mit Abgasturbolader einen Turbogenerator nachzuschalten, in welchem ein Teil der in dem Abgasstrom enthaltenen Energie zur Erzeugung von Strom genutzt wird. Ein ähnliches System hat auch die Bowman Power Group Ltd. zur Steigerung der Effizienz bei der Stromerzeugung vorgeschlagen.

Nachteilig bei derartigen Lösungen ist, dass teilweise in das Motormanagement des Verbrennungsmotors eingegriffen werden muss, um den zusätzlichen Turbogenerator betreiben zu können. Zudem sinkt meist auch der Wirkungsgrad der Stromerzeugung aus der mechanischen Energie des Verbrennungsmotors.

Weiter enthält der Abgasstrom stromabwärts des Turbogenerators bei derartigen bekannten Systemen sowohl thermische als auch kinetische Energie, welche meist unbenutzt abgeführt wird. Es besteht daher noch Verbesserungspotential hinsichtlich der Effizienz derartiger Einrichtungen.

Aufgabe der vorliegenden Erfindung ist es demgegenüber, eine Einrichtung und ein Verfahren der eingangs genannten Art bereitzustellen, welche möglichst mit industriellen Standardkomponenten eine weitere Effizienzsteigerung bei der Stromerzeugung ermöglichen.

Diese Aufgabe wird erfindungsgemäß mit einer Einrichtung mit den Merkmalen des Anspruchs 1 gelöst. Erfindungsgemäß ist dabei vorgesehen, dass die motorbetriebene Einrichtung zusätzlich einen Wärmetauscher sowie ein diesem zugeordnetes Kraftwerk aufweist. Dieses kann insbesondere ein nach dem Organic-Rankine-Cycle (ORC) oder nach dem Clausius-Rankine-Cycle (CRC) arbeitendes Kraftwerk sein. Hierzu sind die Abgasleitung des Verbrennungsmotors und/oder eine Abgasleitung des Turbogenerators derart mit dem Wärmetauscher verbunden, dass zur zusätzlichen Stromerzeugung in dem Kraftwerk Wärme aus dem Abgasstrom des Verbrennungsmotors und/oder des Turbogenerators auskoppelbar ist. Der Erfindung liegt dabei die Idee zugrunde, dass die in dem Abgasstrom des Verbrennungsmotors bzw. dem des Turbogenerators enthaltene thermische Energie zur zusätzlichen Stromerzeugung genutzt werden kann. Alternativ oder zusätzlich hierzu kann diese thermische Energie auch als Prozesswärme genutzt werden.

Nach einer bevorzugten Ausführungsform der Erfindung ist dem Wärmetauscher eine Einrichtung vorgeschaltet, die die Druckdifferenz zwischen der Umgebung und der Abgasleitung des Turbogenerators steigern kann. Dies ist vorzugsweise eine dem Wärmetauscher vorgeschaltete Strahlpumpe, der ein Teil des Abgasstromes des Verbrennungsmotors unter Umgehung des Turbogenerators zugeführt wird. Hierdurch wird der Abgasstrom aus dem Turbogenerator in die Strahlpumpe eingesaugt bzw. in dieser mitgerissen. Auf diese Weise kann mit technisch einfachen und kostengünstigen Mitteln der Gesamtwirkungsgrad der Einrichtung verbessert werden. Alternativ oder zusätzlich hierzu kann auch stromabwärts des Wärmetauschers eine Einrichtung zur Steigerung der Druckdifferenz zwischen der Umgebung und der Abgasleitung des Turbogenerators vorgesehen sein. Dies ist beispielsweise ein dem Wärmetauscher nachgeschalteter Saugzug, der vorzugsweise elektrisch betätigt wird.

In Weiterbildung dieses Gedankens ist es vorgesehen, dass der Saugzug in seiner Leistung auf den Verbrennungsmotor und/oder den Turbogenerator derart abgestimmt ist, dass eine Verringerung des Wirkungsgrads des Verbrennungsmotors durch den Turbogenerator mittels des Saugzugs kompensiert wird. Mit anderen Worten gleicht der Saugzug zumindest teilweise den Gegendruck des Turbogenerators im Abgasstrom des Verbrennungsmotors aus. Es ist somit möglich, dass der Verbrennungsmotor ohne Einbußen im Wirkungsgrad auch bei Nachrüstung des Turbogenerators weiterbetrieben wird. Die erfindungsgemäße Einrichtung eignet sich somit auch zur Nachrüstung bestehender Systeme mit einem Verbrennungsmotor und einem Generator.

Nach einer bevorzugten Ausführungsform ist ein Frequenzumrichter vorgesehen, der die in dem Generator, dem Turbogenerator und/oder dem Kraftwerk erzeugte Gleich- oder Wechselspannung in eine Netzspannung und -frequenz umrichten kann, so dass sich diese in ein Stromnetz einspeisen lässt. Dabei wird es besonders bevorzugt, wenn der in der erfindungsgemäßen Einrichtung erzeugte Strom in ein lokales Stromnetz eingespeist wird.

Es hat sich als besonders zweckmäßig erwiesen, wenn der Saugzug oder dergleichen Einrichtung zur Erhöhung der Druckdifferenz zwischen der Umgebung und der Abgasleitung des Verbrennungsmotors bzw. des Turbogenerators strombetrieben ist und aus einem, insbesondere öffentlichen, Stromnetz gespeist wird.

Nach einer bevorzugten Ausführungsform der Erfindung ist der Verbrennungsmotor ein Biogasmotor oder dergleichen Motor, dessen Energieträger auf nachwachsenden Rohrstoffen beruht. Dem Verbrennungsmotor kann dabei auch ein Abgasturbolader zugeordnet sein, welcher zusätzlich zu dem Turbogenerator vorgesehen ist. Der Abgasturbolader kann den Wirkungsgrad des Verbrennungsmotors weiter steigern.

Bei einem erfindungsgemäßen Verfahren zur Stromerzeugung wird aus der von dem Verbrennungsmotor erzeugten mechanischen Energie in einem Generator Strom erzeugt. Der Abgasstrom des Verbrennungsmotors wird zumindest teilweise einem Turbogenerator zugeführt, in welchem aus der in dem Abgasstrom enthaltenen kinetischen und/oder thermischen Energie zusätzlich Strom erzeugt wird. Erfindungsgemäß ist es dabei vorgesehen, dass die in dem Abgasstrom des Verbrennungsmotors und/oder in dem Abgasstrom des Turbogenerators enthaltene thermische Energie zur zusätzlichen Stromerzeugung und/oder als Prozesswärme genutzt wird. Dies erfolgt vorzugsweise, indem aus der in dem Abgasstrom des Verbrennungsmotors bzw. des Turbogenerators enthaltenen thermischen Energie in einem ORC- oder einem CRC-Kraftwerk zusätzlich Strom erzeugt wird. Die thermische Energie kann hierzu aus dem Abgasstrom mittels eines Wärmetauschers ausgekoppelt und in einen ORC- oder einen CRC-Kreislauf eingekoppelt werden.

Der Wirkungsgrad des erfindungsgemäßen Verfahrens lässt sich dadurch weiter steigern, dass der Abgasstrom stromabwärts des Turbogenerators mittels einer Strahlpumpe und/oder mittels eines Saugzugs angesaugt wird. Hierdurch verringert sich der von dem Verbrennungsmotors aufzubringende Gegendruck.

Um insbesondere den ORC- oder CRC-Prozess effizient betreiben zu können, wird es bevorzugt, wenn die Abgastemperatur stromabwärts des Turbogenerators, d.h. an der Abgasleitung des Turbogenerators, wenigstens etwa 400 °C beträgt.

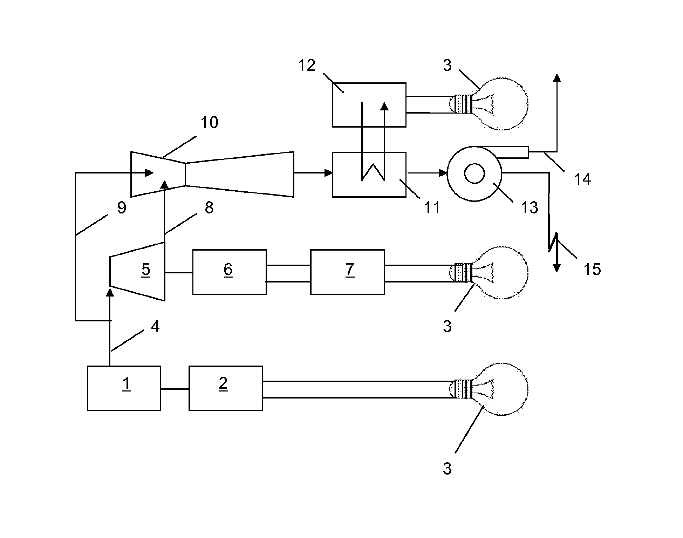

Nachfolgend wird die Erfindung anhand eines Ausführungsbeispiels und unter Bezugnahme auf die beigefügte Zeichnung näher erläutert. Dabei bilden alle beschriebenen und/oder bildlich dargestellten Merkmale für sich oder in beliebiger sinnvoller Kombination den Gegenstand der Erfindung unabhängig von der Zusammenfassung in den Ansprüchen oder deren Rückbeziehung.

Die einzige Figur zeigt schematisch eine Prinzipskizze der erfindungsgemäßen Einrichtung.

Hierbei ist ein Verbrennungsmotor 1 vorgesehen, welcher beispielsweise ein Biogasmotor, ggf. mit einem Abgasturbolader (nicht dargestellt), sein kann. Der Verbrennungsmotor 1 ist mit einem Generator 2 verbunden, beispielsweise indem die Ausgangswelle des Motors 1 mit der Eingangswelle des Generators 2 gekoppelt ist. Hierdurch lässt sich im Betrieb des Verbrennungsmotors 1 Strom erzeugen, welcher an einen schematisch dargestellten Verbraucher 3 oder ein lokales und/oder öffentliches Stromnetz abgegeben werden kann.

Das Abgas des Verbrennungsmotors 1 wird über eine Abgasleitung 4 teilweise einer Turboladerturbine 5 zugeführt, welche wiederum mit einem Generator 6 zu einer Turbogeneratoreinheit gekoppelt ist. Auch der Generator 6 erzeugt im Betrieb Strom, welcher über einen Frequenzumrichter 7 ebenfalls an einen Verbraucher 3 oder ein lokales Netz abgegeben werden kann.

Der Abgasstrom gelangt aus der Turboladerturbine 5 in eine Abgasleitung 8 des Turbogenerators. Weiter ist abzweigend von der Abgasleitung 4 des Verbrennungsmotors 1 eine Bypassleitung 9 vorgesehen, über welche ggf. unter Zwischenschaltung von Steuer- oder Regelungsventilen bzw. -klappen (nicht dargestellt) ein Teil des Abgases des Verbrennungsmotors einer Strahlpumpe 10 zugeführt werden kann. Diese erzeugt einen Unterdruck in der Abgasleitung 8 des Turbogenerators.

Stromabwärts der Strahlpumpe 10 ist ein Wärmetauscher 11 vorgesehen, welcher die thermische Energie aus dem Abgasstrom auskoppelt und einem weiteren Kraftwerk 12, beispielsweise einem ORC- oder einem CRC-Kraftwerk, zuführt. In diesem wird wiederum zusätzlicher Strom erzeugt, der einem Verbraucher 3 oder einem lokalen Netz zugeführt werden kann.

Dem Wärmetauscher 11 ist nach einer bevorzugten Ausführungsform ein Saugzug 13 nachgeschaltet, welcher den Druckabfall in dem Abgasstrom durch den Turbogenerator, die Strahlpumpe und/oder den Wärmetauscher zumindest teilweise kompensieren kann. Aus dem Saugzug 13 kann der abgekühlte Abgasstrom über eine Leitung 14 in die Umgebung abgegeben werden. Der Saugzug 13 wird dabei über eine schematisch angedeutete Stromquelle 15 mit Energie versorgt. Diese Stromquelle 15 ist vorzugsweise das lokale und/oder öffentliche Stromnetz, in welches der erzeugte Strom eingespeist wird.

Nach einer bevorzugten Ausgestaltung der Erfindung wird der Gasmotor 1 z. B. mit Biogas betrieben. Der in dem Generator 2 durch den Motor 1 erzeugte Strom kann zu EEG-Bedingungen (Erneuerbare-Energien-Gesetz) in ein lokales bzw. öffentliches Netz eingespeist werden. Die von dem heißen Motorabgas angetriebene Turboladerturbine 5 erzeugt über ihren Generator 6 ebenfalls Strom, welcher zu EEG-Bedingungen eingespeist werden kann. Bei einem Überschuss an Motorabgas kann dieser über die Bypassleitung 9 in die Strahlpumpe 10 eingespeist werden. Hierdurch wird in der Abgasleistung 8 des Turbogenerators ein Unterdruck erzeugt, der die Leistung des Turbogenerators erhöht. Eine Zumischung von Abgas des Verbrennungsmotors 1 hat den zusätzlichen Effekt, dass die Abgastemperatur stromabwärts der Strahlpumpe 10 steigt. Diese beträgt beispielsweise etwa 450 °C. In dem Abgas ist noch ausreichend Energie enthalten, die über eine Wärmeauskopplung als Prozesswärme genutzt werden kann oder, wie in der Figur dargestellt, über einen ORC- oder CRC-Prozess Strom erzeugen kann, welcher wiederum zu EEG-Bedingungen eingespeist werden kann. Durch den Saugzug 13 wird die Leistungseinbuße des Gasmotors 1 verhindert oder zumindest minimiert. Die für den Antrieb des Saugzugs 13 erforderliche Energie kann aus dem lokalen/öffentlichen Netz bezogen werden.

### Bezugszeichenliste:

- 1: Verbrennungsmotor
- 2: Generator
- 3: Verbraucher (Netz)
- 4: Abgasleitung
- 5: Turboladerturbine
- 6: Generator
- 7: Frequenzumrichter
- 8: Abgasleitung
- 9: Bypassleitung
- 10: Strahlpumpe
- 11: Wärmetauscher
- 12: ORC-/CRC-Prozess
- 13: Saugzug
- 14: Abgasleitung
- 15: Stromquelle (Netz)

## Patentansprüche

1. Motorbetriebene Einrichtung zur Stromerzeugung mit einem Verbrennungsmotor (1), dessen Ausgangswelle mit einem Generator (2) zur Stromerzeugung verbunden ist, und dessen Abgasleitung (4) derart mit einem Turbogenerator (5, 6) verbunden ist, dass der Abgasstrom des Verbrennungsmotors (1) zumindest teilweise dem Turbogenerator (5, 6) zur zusätzlichen Stromerzeugung zuführbar ist, **dadurch gekennzeichnet, dass** zusätzlich ein Wärmetauscher (11) sowie ein diesem zugeordnetes ORC- oder CRC-Kraftwerk (12) vorgesehen sind, wobei die Abgasleitung (8, 9) des Verbrennungsmotors (1) und/oder eine Abgasleitung des Turbogenerators (5, 6) derart mit dem Wärmetauscher (11) verbunden sind, dass zur zusätzlichen Stromerzeugung in dem ORC- oder CRC-Kraftwerk (12) Wärme aus dem Abgasstrom des Verbrennungsmotors (1) und/oder des Turbogenerators (5, 6) auskoppelbar ist.

2. Einrichtung nach Anspruch 1, **dadurch gekennzeichnet, dass** dem Wärmetauscher (11) eine Strahlpumpe (10) derart vorgeschaltet ist, dass ein Teil des Abgasstroms des Verbrennungsmotors (1) unter Umgehung des Turbogenerators (5, 6) der Strahlpumpe (10) zugeführt wird.

3. Einrichtung nach Anspruch 1 oder 2, **dadurch gekennzeichnet, dass** dem Wärmetauscher (11) ein Saugzug (13) nachgeschaltet ist.

4. Einrichtung nach Anspruch 3, **dadurch gekennzeichnet, dass** der Saugzug (13) in seiner Leistung auf den Verbrennungsmotor (1) und/oder den Turbogenerator (5, 6) derart abgestimmt ist, dass eine Verringerung des Wirkungsgrads des Verbrennungsmotors (1) durch den Turbogenerator (5, 6) durch den Saugzug (13) kompensiert wird.

5. Einrichtung nach einem der vorhergehenden Ansprüche, **dadurch gekennzeichnet, dass** dem Generator (2), dem Turbogenerator (5, 6) und/oder dem ORC- oder CRC-Kraftwerk (12) ein Frequenzumrichter (7) nachgeschaltet ist.

6. Einrichtung nach einem der vorhergehenden Ansprüche, **dadurch gekennzeichnet, dass** dem Generator (2), dem Turbogenerator (5, 6) und/oder dem ORC- oder CRC-Kraftwerk (12) Mittel zur Einspeisung des in diesen erzeugten Stroms in ein, insbesondere öffentliches, Stromnetz (15) zugeordnet sind.

7. Einrichtung nach einem der Ansprüche 3 bis 6, **dadurch gekennzeichnet, dass** der Saugzug (13) strombetrieben ist und aus einem, insbesondere öffentlichen, Stromnetz (15) gespeist wird.

8. Einrichtung nach einem der vorhergehenden Ansprüche, **dadurch gekennzeichnet, dass** der Verbrennungsmotor (1) ein Biogasmotor ist.

9. Einrichtung nach einem der vorhergehenden Ansprüche, **dadurch gekennzeichnet, dass** dem Verbrennungsmotor (1) ein Abgasturbolader zugeordnet ist.

10. Verfahren zur Stromerzeugung mittels eines, insbesondere mit nachwachsenden Rohstoffen betreibbaren, Verbrennungsmotors (1), wobei aus der von dem Verbrennungsmotor (1) erzeugten mechanischen Energie in einem Generator (2) Strom erzeugt wird, und wobei der Abgasstrom des Verbrennungsmotors (1) zumindest teilweise einem Turbogenerator (5, 6) zugeführt wird, in welchem aus der in dem Abgasstrom enthaltenen kinetischen und/oder thermischen Energie zusätzlich Strom erzeugt wird, **dadurch gekennzeichnet, dass** die in dem Abgasstrom des Verbrennungsmotors (1) und/oder des Turbogenerators (5, 6) enthaltene thermische Energie zur zusätzlichen Stromerzeugung und/oder als Prozesswärme genutzt wird.

11. Verfahren nach Anspruch 10, **dadurch gekennzeichnet, dass** aus der in dem Abgasstrom des Verbrennungsmotors (1) und/oder des Turbogenerators (5, 6) enthaltenen thermischen Energie in einem ORC- oder CRC-Kraftwerk (12) zusätzlich Strom erzeugt wird.

12. Verfahren nach Anspruch 10 oder 11, **dadurch gekennzeichnet, dass** der Abgasstrom stromabwärts des Turbogenerators (5, 6) mittels einer Strahlpumpe (10) und/oder mittels eines Saugzugs (13) angesaugt wird.

13. Verfahren nach einem der Ansprüche 10 bis 12, **dadurch gekennzeichnet, dass** der in dem Generator (2), dem Turbogenerator (5, 6) und/oder dem ORC- oder CRC-Kraftwerk (12) erzeugte Strom in ein, insbesondere öffentliches, Stromnetz (15) eingespeist wird, und dass ein ggf. zur Verbesserung des Wirkungsgrads des Verbrennungsmotors (1) und/oder des Turbogenerators (5, 6) vorgesehenes Aggregat, insbesondere der Saugzug (13), strombetrieben ist und aus diesem Stromnetz (15) gespeist wird.

14. Verfahren nach einem der Ansprüche 10 bis 12, **dadurch gekennzeichnet, dass** die Abgastemperatur stromabwärts des Turbogenerators (5, 6) wenigstens etwa 400 °C beträgt.
